# EUROPÄISCHE PATENTSCHRIFT

(11) **EP 0 615 071 B1**
(45) Veröffentlichungstag und Bekanntmachung des Hinweises auf die Patenterteilung: **14.04.1999**
(21) Anmeldenummer: 94101295.7
(22) Anmeldetag: 28.01.1994
(51) Int. Cl.: F16B 21/08

(54) **Halteelement aus Kunststoff**
Plastic retaining element
Elément de raccordement en matière plastique

(30) Priorität: 09.03.1993 DE 4307434
(43) Veröffentlichungstag der Anmeldung: 14.09.1994
(73) Patentinhaber: TRW Automotive Electronics & Components GmbH & Co. KG, 78315 Radolfzell (DE)
(72) Erfinder: Kraus, Willibald, D-67269 Grünstadt (DE)
(74) Vertreter: Schieschke, Klaus, Dipl.-Ing.

(56) Entgegenhaltungen:
- EP-A- 0 421 056
- DE-A- 1 575 071
- DE-U- 9 016 949
- FR-A- 2 648 208
- GB-A- 2 163 509

## Beschreibung

Die Erfindung bezieht sich auf ein Halteelement aus Kunststoff, mit einem Grundkörper und einem daran anschließenden, federnden Anschlag, wobei an den Grundkörper mehrere, jeweils einander gegenüberliegende, mit ihren Stirnflächen gegen den Federteller gerichtete, federnde Rastnasen angeformt sind.

Als Stand der Technik ist bereits ein derartiges Halteelement bekannt (DE-U- 81 13 637). Hier ist der Grundkörper zylindrisch ausgebildet, wobei zwischen den einander diagonal gegenüberliegenden Federzungenpaaren mit Stirnflächen in derselben Ebene am Umfang des Grundkörpers ein weiteres Federzungenpaar angeordnet ist, dessen Stirnflächen in einer anderen Ebene gegenüber der Unterseite des Federtellers liegen. Diese Konstruktion ist so aufgebaut, daß sich eine kostenaufwendige Herstellung ergibt.

Zum Stand der Technik zählt weiterhin ein Halteelement, dessen Grundkörper wiederum im Querschnitt zylinderförmig ausgebildet ist, wobei zwei, diagonal einander gegenüberliegende Rastnasen angeformt sind (US-A- 3 393 431). Bei dieser bekannten Konstruktion kann sich der Nachteil ergeben, daß bei einer Drehung um 90° um die Längsachse ein Festsitz nicht mehr gewährleistet ist.

In gleicher Weise und mit den gleichen Nachteilen behaftet ist eine andere Konstruktion, bei welcher zwei, einander gegenüberliegende Rastnasen mit verschiedenen Abstufungen versehen sind (US-A- 2 424 757, US-A- 3 079 581, US-A- 3 493 918).

Darüber hinaus ist ein Halteelement bekannt, dessen Grundkörper Rechteckform aufweist (US-A- 2 836 215). Bei dieser bekannten Konstruktion sind nur zwei, einander gegenüberliegende Rastnasen vorgesehen, welche beim Einsetzen einer Schraube in eine zentrische Öffnung eine Spreizung erfahren und damit hinter die Flächen eines Trägers treten. Damit ist bei dieser bekannten Konstruktion ein Spannelement, nämlich eine Schraube erforderlich, um eine Befestigung an einem Träger zu ermöglichen.

Weiterhin ist aus der FR-A-2 648 208 ein Halteelement aus Kunststoff mit den Merkmalen des Oberbegriffs des Anspruchs 1 bekannt.

Der vorliegenden Erfindung liegt demgegenüber die Aufgabe zugrunde, ein Halteelement der eingangs genannten Art zu schaffen, welches auch bei 90° Drehung um seine Längsachse einen einwandfreien Festsitz innerhalb eines Trägers gewährleistet, wobei außerdem insbesondere eine werkzeugtechnisch gut durchführbare und kostensparende Herstellung gewährleistet sein soll.

Diese Aufgabe wird bei einem gattungsgemäßen Halteelement erfindungsgemäß dadurch gelöst, daß der Grundkörper im Querschnitt rechteckig ausgebildet ist, daß der Grundkörper auf allen vier Seitenflächen jeweils mit diagonal einander gegenüberliegenden, federnden Rastnasen versehen und so als Zentrierkäfig ausgebildet ist, und daß mindestens zwei, diagonal einander gegenüberliegende Rastnasen jeweils T-Form aufweisen, wobei der querliegende Steg die Stirnfläche besitzt und der senkrechte Steg zwischen zwei in der Ebene der Seitenflächen des Grundkörpers liegenden Ausnehmungen angeordnet ist.

Hierdurch ergibt sich der Vorteil, daß der Grundkörper in Art eines Zentrierkäfigs ausgebildet ist, welches auch bei beliebiger Drehung um seine Längsachse eine genaue Zentrierung in der Trägeröffnung gewährleistet. Ein unerwünschtes Abkippen wird hierdurch einwandfrei vermieden, gleichgültig, ob die Öffnung im Träger als Bohrung, als Langloch oder als Rechtecköffnung ausgebildet ist. Durch die spezielle Gestaltung ergibt sich weiterhin eine werkzeugtechnisch gut durchführbare kostensparende Herstellung.

Vorteilhafte Weiterbildungen ergeben sich aus den Unteransprüchen.

Die Erfindung wird nachfolgend anhand von in der Zeichnung dargestellten Ausführungsbeispielen näher beschrieben.

In der Zeichnung zeigen:
- Fig. 1: eine Seitenansicht des Halteelements
- Fig. 2: eine Draufsicht auf das Halteelement nach Fig. 1
- Fig. 3: eine Ansicht in Pfeilrichtung gemäß I nach Fig. 1
- Fig. 4 und 5: zwei perspektivische Ansichten des erfindungsgemäßen Halteelements, jeweils um die Längsachse gedreht;

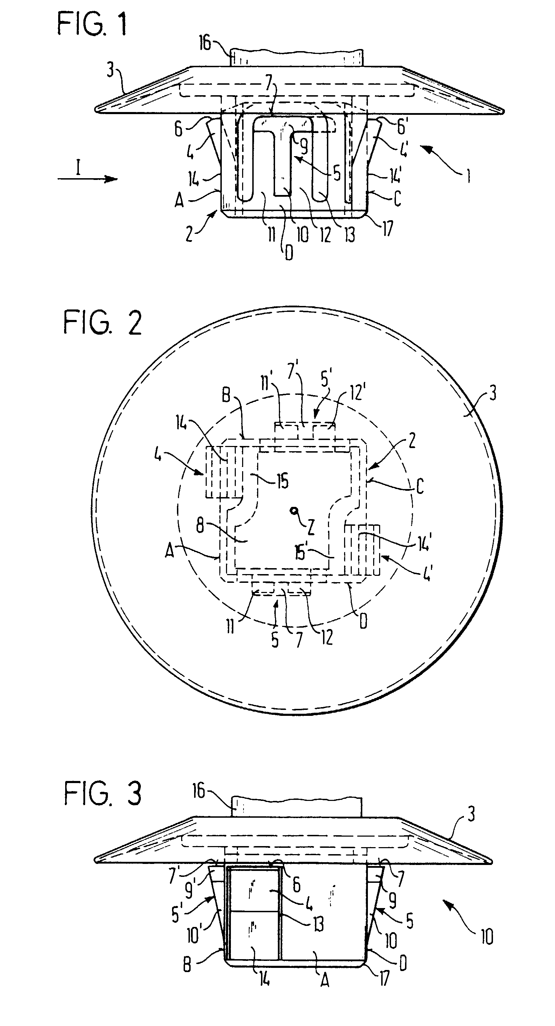

Das aus Kunststoff bestehende Halteelement 1 weist im wesentlichen einen Grundkörper 2 und einen daran anschließenden federnden Anschlag, z.B. einen umlaufenden Federteller 3 auf. Dieser Federteller 3 kann gemäß Fig. 2 rund sein, wobei auch die Möglichkeit besteht, diesen oval, eckig oder in anderer Konfiguration zu gestalten.

Der Grundkörper 2 ist im Querschnitt quadratisch ausgebildet und weist nach Fig. 2 vier Seitenflächen A, B, C und D auf. Diese vier Seitenflächen sind jeweils mit diagonal einander gegenüberliegenden, federnden Rastnasen 4, 4' sowie 5, 5' versehen.

Wie ersichtlich, weisen hierbei die in den Seitenflächen B und D liegenden bzw. aus diesen herausragenden Rastnasen 5 und 5' in Vorderansicht T-Form auf.

Aus Fig. 1 geht hervor, daß der querliegende Steg 9 die Stirnfläche 7 besitzt, wobei der senkrechte Steg 10 zwischen zwei in der Ebene der Seitenfläche D des Grundkörpers 2 liegenden Ausnehmungen 11 und 12 angeordnet ist.

Entsprechend weist auch die Rastnase 5' T-Form auf mit einem querliegenden Steg 9' sowie einem senkrechten Steg 10', welcher wiederum zwischen zwei in der Ebene der Seitenflächen A liegenden Ausnehmungen 11' und 12' angeordnet ist (siehe Fig. 2).

Aus Fig. 2 ist darüber hinaus ersichtlich, daß der Grundkörper 2 im Inneren eine Freiarbeitung 8 aufweist. Diese Freiarbeitung 8 erstreckt sich bis in Höhe der Unterseite des Federtellers 3. Sie kann auch durch mindestens einen Steg unterbrochen sein.

Aus den Seiten A bzw. C sind wiederum zwei diagonal einander gegenüberliegende Rastnasen 4 und 4' herausgeformt, welche gemäß Fig. 3 in Vorderansicht Rechteckform aufweisen. Der Endbereich 14 bzw. 14' dieser rechteckigen Rastnasen 4, 4' ist gegenüber der Seitenfläche A bzw. C des Grundkörpers 2 in die Freiarbeitung 8 eingezogen, so daß gemäß Fig. 2 die Freiarbeitung 8 zwei einander diagonal gegenüberliegende, eingezogene Bereiche 15 und 15' aufweist.

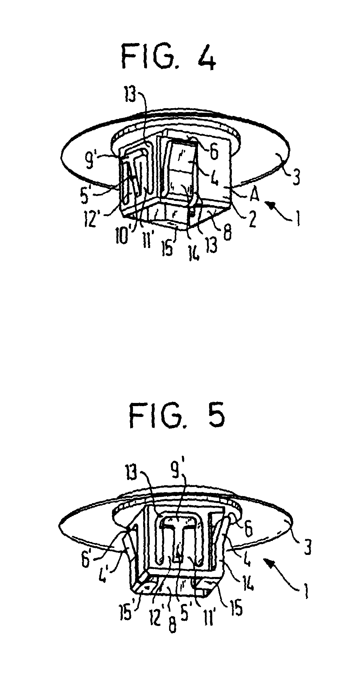

Aus den Fig. 4 und 5 geht hervor, daß die T-förmigen Rastnasen 5' sowohl mit dem senkrechten Steg 10' als auch mit dem querliegenden Steg 9' aus der Ebene der dazwischenliegenden Ausnehmungen 11, 12 heraustreten. Demgegenüber sind die diagonal einander gegenüberliegenden Rastnasen 4 und 4' so gestaltet, daß ihr jeweiliger Endbereich 14 in Höhe der ihnen zugeordneten Seitenflächen liegt und die Rastnasen 4, 4' erst etwa in der Mitte abgewinkelt sind. Ihre Stirnflächen 6, 6' treten damit aus den ihnen zugeordneten Seitenflächen A und C heraus. Entsprechend dieser Konstruktion sind nach Fig. 2 die vorgenannten eingezogenen Bereiche 15 bzw. 15' im Grundkörper 2 vorhanden.

Jede der Rastnasen 4, 4' bzw. 5, 5' bzw. deren Ausnehmungen 11 und 12; 11' und 12' ist von einer Durchbrechung 13 umgeben, welche sich bis in die Freiarbeitung 8 des Grundkörpers 2 erstreckt. Damit besitzen die Rastnasen 4, 4' bzw. 5, 5' eine sehr gute Federwirkung, so daß sich die entsprechenden Stirnflächen 6 und 6' bzw. 7 und 7' der vorgenannten Rastnasen an die Unterseite eines nicht näher dargestellten Träger legen, wohingegen die gegenüberliegende Seite dieses Trägers von dem umlaufenden federnden Rand des Federteiles 3 beaufschlagt wird.

Der im Querschnitt quadratisch ausgebildete Grundkörper 2 mit den speziell geformten Rastnasen 4 und 4' sowie 5 und 5' bildet damit insgesamt einen Zentrierkäfig. Es wird hierdurch eine genaue Zentrierung in einer Trägeröffnung erzielt, gleichgültig, ob diese als Bohrung, als Langloch oder als Rechteckloch ausgebildet ist. Ein unerwünschtes Abkippen um die zentrische Achse Z nach Fig. 2 ist nicht möglich.

Aus Fig. 3 geht hervor, daß die Stirnflächen 6, 6' und 7, 7' der betreffenden Rastnasen in derselben Horizontalebene liegen.

In einer nicht näher dargestellten Ausführungsform besteht auch die Möglichkeit, daß diese Stirnflächen der betreffenden Rastnasen in mindestens zwei unterschiedlichen Horizontalebenen liegen, so daß das erfindungsgemäße Halteelement 1 auch in Träger unterschiedlicher Dicke eingesetzt werden kann und dort einwandfrei haltert.

Oberhalb des Federtellers 3 kann sich nach Fig. 1 bzw. 3 ein Anschlußbereich 16 für ein nicht näher dargestelltes Lager-, Halte- oder Rastelement befinden, bspw. ein Kabelband zur Halterung von Rohren, ein Einklippbereich oder eine Verrastung zur Lagerung eines nicht näher dargestellten Teils.

Um die Montage des Grundkörpers 2 in einer nicht näher dargestellten Trägeröffnung zu vereinfachen, weist der Grundkörper 2 stirnseitig eine Einführabschrägung 17 gemäß Fig. 1 und 3 auf.

Durch die spezielle Gestaltung wird ein Halteelement 1 aus Kunststoff geschaffen, welches auch bei beliebiger Drehung um seine zentrische Achse Z einen einwandfreien Festsitz und eine einwandfreie Zentrierung in der Trägeröffnung gewährleistet; ein unerwünschtes Abkippen wird vermieden. Außerdem ist die gesamte Einheit so konzipiert, daß sich eine werkzeugtechnisch gute und kostensparende Herstellung ergibt.

## Patentansprüche

1. Halteelement aus Kunststoff, mit einem Grundkörper (2), welcher im Inneren eine Freiarbeitung (8) aufweist, und mindestens einem daran anschließenden, federnden Anschlag (3), wobei an den Grundkörper (2) mehrere, jeweils einander gegenüberliegende, mit ihren Stirnflächen gegen den Anschlag gerichtete federnde Rastnasen (4, 4'; 5, 5') angeformt sind, wobei jede Rastnase (4, 4'; 5, 5') von bis zur Freiarbeitung (8) im Grundkörper (2) sich erstreckenden Durchbrechungen (13) umgeben ist,
dadurch gekennzeichnet,
daß der Grundkörper (2) im Querschnitt rechteckig ausgebildet ist,
daß der Grundkörper (2) auf allen vier Seitenflächen (A, B, C, D) jeweils mit diagonal einander gegenüberliegenden, federnden Rastnasen (4, 4'; 5, 5') versehen und so als Zentrierkäfig ausgebildet ist, und
daß mindestens zwei, diagonal einander gegenüberliegende Rastnasen (5, 5') jeweils T-Form aufweisen, wobei der querliegende Steg (9, 9') die Stirnfläche (7, 7') besitzt und der senkrechte Steg (10, 10') zwischen zwei in der Ebene der Seitenflächen (A, B, C, D) des Grundkörpers (2) liegenden Ausnehmungen (11, 12; 11', 12') angeordnet ist.

2. Halteelement nach Anspruch 1, dadurch gekennzeichnet, daß der Anschlag federnd als umlaufender Federteller (3) ausgebildet ist.

3. Halteelement nach Anspruch 1, dadurch gekennzeichnet, daß der Grundkörper (2) im Querschnitt quadratisch ausgebildet ist.

4. Halteelement nach den Ansprüchen 1 bis 3, dadurch gekennzeichnet, daß an zwei gegenüberliegenden Seitenflächen (A, C) des Grundkörpers (2) in Vorderansicht rechteckige Rastnasen (4, 4') und in den angrenzenden Seitenflächen (B, D) zwei T-förmige Rastnasen (5, 5') angeformt sind.

5. Halteelement nach Anspruch 4, dadurch gekennzeichnet, daß der Endbereich (14, 14') der rechteckigen Rastnasen (4, 4') gegenüber den Seitenflächen (A, C) des Grundkörpers (2) in die Freiarbeitung (8) eingezogen ist und
daß die Freiarbeitung (8) zwei, einander diagonal gegenüberliegende eingezogene Bereiche (15, 15') aufweist.

6. Halteelement nach einem der vorhergehenden Ansprüche, dadurch gekennzeichnet, daß die Stirnflächen (6, 6'; 7, 7') der Rastnasen (4, 4'; 5, 5') in der selben Horizontalebene liegen.

7. Halteelement nach den Ansprüchen 1 - 5, dadurch gekennzeichnet, daß die Stirnflächen (6, 6'; 7, 7') der Rastnasen (4, 4'; 5, 5') in mindestens zwei unterschiedlichen Horizontalebenen liegen.

8. Halteelement nach Anspruch 1, dadurch gekennzeichnet, daß oberhalb des federnden Anschlags (3) ein Anschlußbereich (16) für ein Lager-, Halte- oder Rastelement angeordnet ist.

9. Halteelement nach einem der vorhergehenden Ansprüche, dadurch gekennzeichnet, daß der Grundkörper (2) stirnseitig mit einer Einführabschrägung (17) versehen ist.

## Claims

1. Plastic retaining element, having a basic body (2), which has a relieved portion (8) in the interior, and at least one adjoining elastic stop (3), a plurality of elastic catch lugs (4, 4'; 5, 5'), which are in each case opposite one another and are directed with their end faces towards the stop, being integrally formed on the basic body (2), each catch lug (4, 4'; 5, 5') being surrounded by apertures (13) extending up to the relieved portion (8) in the basic body (2), characterized in that the basic body (2) is of rectangular design in cross section, in that the basic body (2), on all four side faces (A, B, C, D), is provided in each case with diagonally opposite, elastic catch lugs (4, 4'; 5, 5') and is thus designed as a centring cage, and in that at least two diagonally opposite catch lugs (5, 5') in each case have a T-shape, the transversely lying web (9, 9') having the end face (7, 7'), and the perpendicular web (10, 10') being arranged between two recesses (11, 12; 11', 12') lying in the plane of the side faces (A, B, C, D) of the basic body (2).

2. Retaining element according to Claim 1, characterized in that the stop is designed in an elastic manner as an encircling spring plate (3).

3. Retaining element according to Claim 1, characterized in that the basic body (2) is of square design in cross section.

4. Retaining element according to Claims 1 to 3, characterized in that catch lugs (4, 4') which are rectangular in front view are integrally formed on two opposite side faces (A, C) of the basic body (2), and two T-shaped catch lugs (5, 5') are integrally formed in the adjoining side faces (B, D).

5. Retaining element according to Claim 4, characterized in that the end region (14, 14') of the rectangular catch lugs (4, 4') is drawn into the relieved portion (8) relative to the side faces (A, C) of the basic body (2), and in that the relieved portion (8) has two diagonally opposite, drawn-in regions (15, 15').

6. Retaining element according to one of the preceding claims, characterized in that the end faces (6, 6'; 7, 7') of the catch lugs (4, 4'; 5, 5') lie in the same horizontal plane.

7. Retaining element according to Claims 1 to 5, characterized in that the end faces (6, 6'; 7, 7') of the catch lugs (4, 4'; 5, 5') lie in at least two different horizontal planes.

8. Retaining element according to Claim 1, characterized in that a connecting region (16) for a mounting, retaining or catch element is arranged above the elastic stop (3).

9. Retaining element according to one of the preceding claims, characterized in that the basic body (2) is provided with an insertion bevel (17) at the front end.

## Revendications

1. Elément de retenue en matière plastique comprenant un corps de base (2) intérieurement muni d'une dépouille (8), et au moins une butée élastique (3) située dans la continuité directe, plusieurs becs encliquetables élastiques (4, 4' ; 5, 5'), respectivement placés en vis-à-vis mutuel et dirigés vers la butée par leurs faces extrêmes, étant venus solidairement de moulage sur le corps de base (2), chaque bec encliquetable (4, 4' ; 5, 5') étant entouré par des discontinuités (13) s'étendant jusqu'à la dépouille (8) pratiquée dans le corps de base (2),
caractérisé par le fait
que le corps de base (2) est de réalisation rectangulaire en coupe transversale ;
que le corps de base (2) est respectivement pourvu, sur toutes les quatre surfaces latérales (A, B, C, D), de becs encliquetables élastiques (4, 4' ; 5, 5') placés diagonalement en vis-à-vis, et est ainsi réalisé comme une cage de centrage ; et
qu'au moins deux becs encliquetables (5, 5') placés diagonalement en vis-à-vis revêtent respectivement la forme d'un T, la membrure (9, 9') disposée transversalement possédant la face extrême (7, 7'), et la membrure verticale (10, 10') étant interposée entre deux évidements (11, 12 ; 11', 12') situés dans le plan des surfaces latérales (A, B, C, D) du corps de base (2).

2. Elément de retenue selon la revendication 1, caractérisé par le fait que la butée est de réalisation élastique, sous la forme d'une rondelle élastique circonférentielle (3).

3. Elément de retenue selon la revendication 1, caractérisé par le fait que le corps de base (2) est de réalisation carrée en coupe transversale.

4. Elément de retenue selon les revendications 1 à 3, caractérisé par le fait que des becs encliquetables (4, 4'), rectangulaires en élévation par-devant, sont venus solidairement de moulage sur deux surfaces latérales (A, C) du corps de base (2) qui sont placées en vis-à-vis, et deux becs encliquetables (5, 5') configurés en T sont venus solidairement de moulage dans les surfaces latérales attenantes (B, D).

5. Elément de retenue selon la revendication 4, caractérisé par le fait que la région extrême (14, 14') des becs encliquetables rectangulaires (4, 4') est renfoncée dans la dépouille (8) par rapport aux surfaces latérales (A, C) du corps de base (2) ; et
que la dépouille (8) présente deux régions renfoncées (15, 15') placées diagonalement en vis-à-vis l'une de l'autre.

6. Elément de retenue selon l'une des revendications précédentes, caractérisé par le fait que les faces extrêmes (6, 6' ; 7, 7') des becs encliquetables (4, 4' ; 5, 5') se trouvent dans le même plan horizontal.

7. Elément de retenue selon les revendications 1-5, caractérisé par le fait que les faces extrêmes (6, 6' ; 7, 7') des becs encliquetables (4, 4' ; 5, 5') se trouvent dans au moins deux plans horizontaux différents.

8. Elément de retenue selon la revendication 1, caractérisé par le fait qu'une zone de rattachement (16), destinée à un élément de portée, de retenue ou d'encliquetage, est disposée au-dessus de la butée élastique (3).

9. Elément de retenue selon l'une des revendications précédentes, caractérisé par le fait que le corps de base (2) est muni, frontalement, d'un biseau d'introduction (17).
